# EUROPEAN PATENT SPECIFICATION

(11) **EP 0 586 228 B1**
(45) Date of publication and mention of the grant of the patent: **10.02.1999**
(21) Application number: 93306874.4
(22) Date of filing: 31.08.1993
(51) Int. Cl.: G11B 20/14, H03M 5/14

(54) **Circuit for calculating DC value in digital recording and reproducing system**
Schaltung zur Berechnung des Gleichstromwertes in einem digitalen Aufzeichnungs-/Wiedergabesystem
Circuit pour calculer la composante continue dans un système d'enregistrement et de reproduction numérique

(30) Priority: 31.08.1992 KR 1577392
(43) Date of publication of application: 09.03.1994
(73) Proprietor: SAMSUNG ELECTRONICS CO., LTD., Suwon-city, Kyungki-do 441-373 (KR)
(72) Inventor: Kim, Byeong-su, Kwanak-gu, Seoul (KR)
(74) Representative: Stanley, David William

(56) References cited:
- EP-A- 0 310 041
- EP-A- 0 392 506
- FR-A- 2 469 047
- US-A- 4 775 985

## Description

The present invention relates to a digital recording and reproducing apparatus comprising a circuit for calculating a DC value applied to a code conversion control apparatus for use in a channel coding method.

Generally speaking, these are the following problems in a digital recording and reproducing system, that are basically caused by a video head and tape, and a rotary transformer. That is, 1) since the rotary transformer cannot transmit or pass a DC signal, the DC component of the digital signal, that is, the DC levels which represent the binary "1" and "0" logic conditions are cut off. This means that the digital signal is recorded without its original DC component. 2) If the video head and the tape are operated in a high frequency area which is over a predetermined frequency, the digital signal cannot be recorded and reproduced due to various losses. Accordingly, a minimum run length value Tₘᵢₙ should be large. 3) Since a magnetic recording and reproducing system has the characteristic of 6dB/oct with respect to a low frequency area, a signal having a low frequency component cannot be recorded. Accordingly, a maximum run length value Tₘₐₓ should be small. 4) The frequency bandwidth of the signal which is recorded and reproduced according to 2) and 3) above should be narrowed within a predetermined frequency bandwidth. Accordingly, the ratio (Tₘₐₓ /Tₘᵢₙ of the maximum run length vs. the minimum run length should be small. 5) During the reproducing period, the variation of DC levels should be suppressed for the benefit of the design of an equalizer and for the prevention of non-linear distortion, i.e., for prevention of deviation from the linear region of a hysteresis curve.

EP-A-0 310 041 disclosed a digital recording and reproducing apparatus comprising means for mapping plural codewords (symbol words) to an information-word in which each received codeword is mapped into a first information word having a negative DC value by using first lookup table means and into a second information word having a positive DC value by using second lookup table means and the first and second information words are stored in first storing means and second storing means respectively, and storing the codeword whose DC value is positive among the plural codewords corresponding to said information-word in order to control the code conversion for selecting the optimum codeword in a recording and reproducing operation; parallel to serial converting means for converting the signal supplied from said first storing means or said second storing means to a serial data format; selecting means for selectively supplying the signals output from said first storing means and said second storing means to the parallel to serial converting means; and a DC value calculating circuit for calculating said DC value of the currently output codeword using the signal supplied from said parallel to serial converting means, and for supplying a control signal to the selecting means to select the signal to be supplied to the parallel to serial converting means among the plural codewords corresponding to an information-word following the current information-word.

Therefore, with the aim of solving the above problems, specific embodiments of the present invention aim to provide a circuit, for use in a digital recording and reproducing system, for calculating a DC value irrespective of any increase or decrease of the bit number of a codeword in a code conversion control apparatus, and to select an optimum codeword by considering a DC value of a previous codeword of a plurality of codewords, which are already established with respect to an information-word, and to reduce variation of the DC level.

According to one aspect of the present invention, there is provided a digital recording and reproducing apparatus comprising means for mapping plural codewords (symbol words) to a information-words in which each received codeword is mapped into a first information word having a negative DC value by using first lookup table means and into a second information word having a positive DC value by using second lookup table means and the first and second information words are stored in first storing means and second storing means, respectively in order to control the code conversion for selecting the optimum codeword in a recording and reproducing operation; parallel to serial converting means for converting the signal supplied from said first storing means or said second storing means to a serial data format; selecting means (SW1) for selectively supplying the signals output from said first storing means and said second storing means to the parallel to serial converting means; and a DC value calculating circuit for calculating said DC value of the currently output codeword using the signal supplied from said parallel to serial converting means, and for supplying a control signal to the selecting means to select the signal to be supplied to the parallel to serial converting means corresponding to an information-word following the current information-word, the DC value calculating circuit comprising counting means comprising a counter being loaded with a reference value from a reference signal generator for the first codeword when the apparatus starts working, which counter is turned up/down by the signal supplied from said parallel to serial converting means for subsequent codewords for generating a codeword digital sum (CDS) value characterised by the DC value calculating circuit comprising:
a load pulse generator for generating a second clock signal by frequency dividing a master clock signal by a predetermined value, whereby said second clock signal is used to control said counting means (72);
a detector for detecting whether or not the CDS value from said counting means is the same as said reference value;
third storing means for holding the previous input value when the reference value is the same as the CDS value, and storing the CDS value from said counting means when said reference value is not the same as the CDS value from said counter; and
a comparator for comparing the magnitude of the signal supplied from said third storing means with the magnitude of said reference value and supplying the result value as a signal for controlling the operation of said selecting means.

Suitably, said load pulse generator comprises:
a counter for receiving said master clock signal and producing a second clock signal which is frequency-divided by a predetermined value;
a delay device for receiving said second clock signal from said counter, and delaying the same in one clock period of said master clock; and
a logic device for performing an AND operation for the output signal of said delay device and said second clock signal, to thereby produce the load pulse.

Suitably, said detector comprises a first logic device for performing a NAND operation for output value of said counter; and a second logic device for performing an AND operation for output signal of said first logic device and said second clock signal, to thereby produce a signal for controlling the operation of said third storing means according to the output signal of said first logic device.

Suitably, said counter comprises a logic device for performing an AND operation for said master clock signal and the signal supplied from said parallel to serial converting means, to thereby produce said master clock signal where said serial data is in a high state; and a counter for receiving a predetermined reference value according to the load pulse generated by said load pulse generator, to thereby count the clock signal from said logic device.

Suitably, said comparator comprises a plurality of inverters for inverting the state of the predetermined bits of the output signal of said third storing means; a plurality of logic devices, for performing AND operation(s) for the output signals of said inverters and said third storing means; and a logic device for performing an OR operation for the output signal of said plurality of said logic devices, to thereby produce a control signal for controlling the operation of said selecting means.

According to another aspect of the present invention, there is provided a digital recording and reproducing apparatus comprising means for mapping plural codewords (symbol words) to a information-words in which each received codeword is mapped into a first information word having a negative DC value by using first lookup table means and into a second information word having a positive DC value by using second lookup table means and the first and second information words are stored in first storing means and second storing means, respectively in order to control the code conversion for selecting the optimum codeword in a recording and reproducing operation; parallel to serial converting means for converting the signal supplied from said first storing means or said second storing means to a serial data format; selecting means for selectively supplying the signals output from said first storing means and said second storing means to the parallel to serial converting means; and a DC value calculating circuit for calculating said DC value of the currently output codeword using the signal supplied from said parallel to serial converting means, and for supplying a control signal to the selecting means to select the signal to be supplied to the parallel to serial converting means corresponding to an information-word following the current information-word, the DC value calculatin circuit comprising counting means comprising a counter being loaded with a reference value from a reference signal generator for the first codeword when the apparatus starts working, which counter is turned up/down by the signal supplied from said parallel to serial converting means for subsequent codewords for generating a codeword digital sum (CDS) value a method of channel coding characterised by the steps of:
generating from a load pulse generator a second clock signal by frequency dividing a master clock signal by a predetermined value, and using said second clock signal to control said counting means ;
detecting whether or not the CDS value from said counting means is the same as said reference value;
holding in a third storing means a previous input value when the reference value is the same as the CDS value, and storing the CDS value from said counting means when said reference value is not the same as the CDS value from said counter; and
comparing the magnitude of the signal supplied from said third storing means with the magnitude of said reference value and supplying the result value as a signal for controlling the operation of said selecting means.

For a better understanding of the invention, and to show how the same may be carried into effect, reference will now be made, by way of example, to Figures 1 to 9G of the accompanying diagrammatic drawings, in which:

Figure 1 is a concept diagram of a codeword digital sum (CDS).

Figure 2 is a table representing an example of applied information-words and their CDS values.

Figures 3A through 3E are concept diagrams showing the DC value (DSV, digital sum variation) corresponding to the CDS value corresponding to the information-words.

Figure 4 is a block diagram of an embodiment of a code conversion control apparatus to which a DC value calculating circuit according to a specific embodiment of the present invention.

Figure 5 is a block diagram of a DC value calculating circuit according to a specific embodiment of the present invention.

Figure 6 is a detailed circuit diagram of a DC value calculating circuit which may be used in the specific embodiment according to the present invention shown in Figure 5.

Figures 7A through 7K are output waveform diagrams of the respective portions shown in Figure 6.

Figure 8 is a detailed circuit diagram of another DC value calculating circuit which may be used in the specific embodiment shown in Figure 5.

Figures 9A through 9G are output waveform diagrams of the respective portions shown in Figure 8.

Hereinafter, specific embodiments according to the present invention will be described with reference to the accompanying drawings.

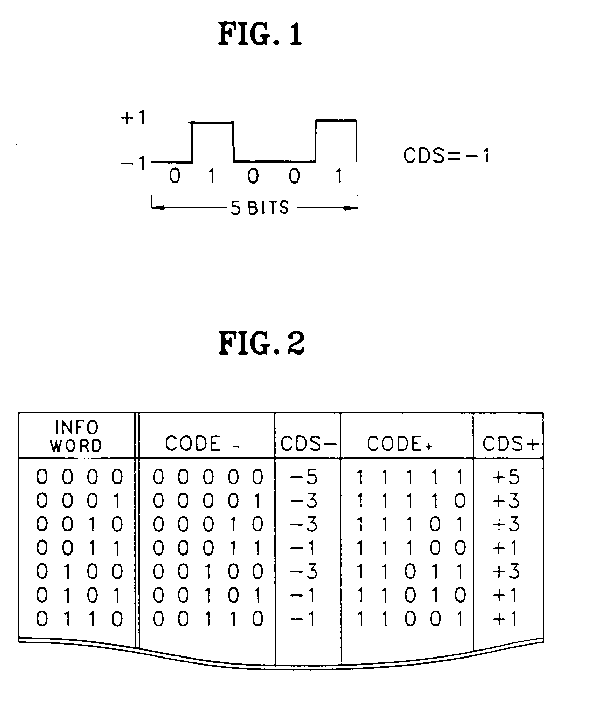

Referring to Figure 1 there is shown a concept diagram of a CDS, which calculates the DC value of a codeword with respect to one information-word by being calculated as a DC value of -1 volt when the bit constituting the codeword is a binary "0," and as a DC value of +1 volt when it is a binary "1." Figure 1 shows employment of the above-mentioned calculating theory, taking an example of the codeword of "01001" (which is referred to as a word), wherein the value of the CDS is equal to "-1."

Figure 2 of the accompanying drawings, represents an example of mapping between codewords and information-words, which uses a channel coding method for converting an information-word applied by one block unit to a symbol word according to a predetermined rule. Here, as an example, four bits are illustrated as one block unit, but in general one block unit is composed of eight bits. Also, as an example, there is illustrated a five-bit codeword as a unit to be mapped, but generally, a ten-bit or fourteen-bit codeword is used. The representative coding method for such a bit condition is an eight to fourteen modulation (EFM). The value of the codeword with respect to the information-word is dependent on the predetermined value and is represented as two or more symbol words. As described in the present example herein, two codewords having a characteristic inverted to each other are applied, and the codeword whose DC value is closest to "0" is selected and supplied among the codewords.

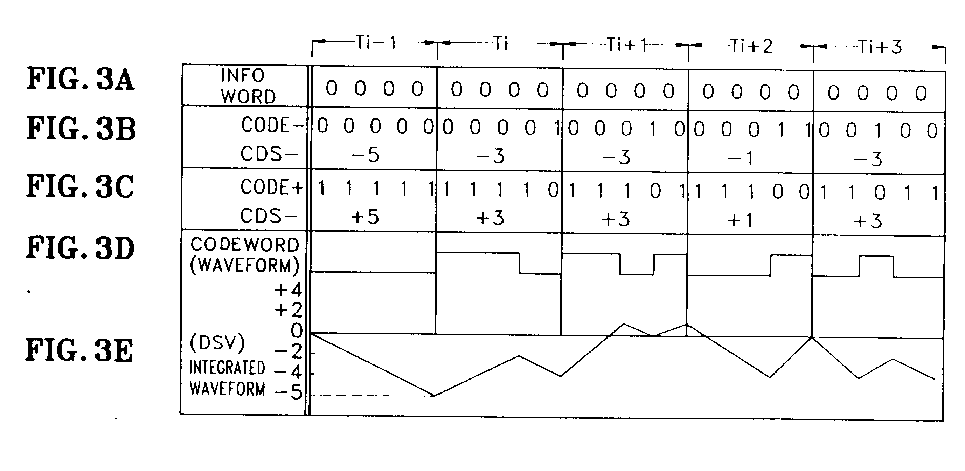

That is, the symbol words capable of being mapped with respect to the information-word "0000" can be "00000" or "11111,". One of these is selected and used as a codeword of the corresponding information-word. For the above-mentioned information-word, either one of the above-mentioned two codewords can be selected, with no big problem. If a codeword whose CDS value is equal to "-5" is selected as shown in Figure 3, it means that there is a greater number of binary "0"'s than that of binary "1"'s in the currently selected codeword. Accordingly, in this example, the codeword which has a lower number of "0"'s is selected as the codeword for this particular information-word.

Similarly, a codeword "11110" whose CDS value is equal to +3 is selected from amongst the codewords among "00001" and "11110", as being that with respect to the information-word "0001." Such codeword selection will be described in more detail through a circuit diagram which will be described afterwards.

Figures 3A through to 3E of the accompanying drawings show the codeword considering the DC level when a codeword corresponding to a respective information-word shown in Figure 2 is established, and its DSV value. DSV is the DC value at a certain moment when the CDS of the codewords being received successively are cumulated continuously.

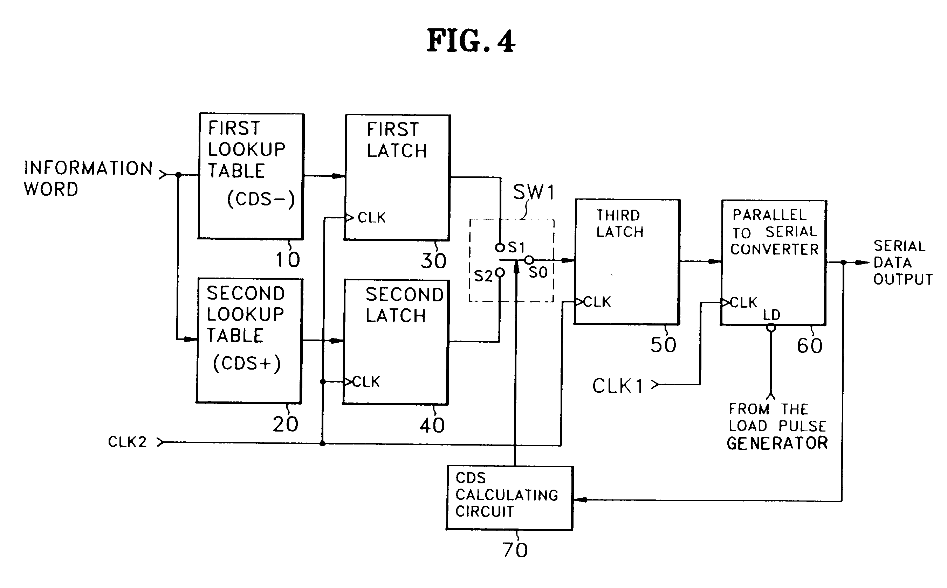

Figure 4 of the accompanying drawings is a block diagram of a code conversion control apparatus to which a CDS calculating circuit according to a specific embodiment of the present invention can be applied.

In Figure 4, the code conversion control apparatus comprises a first look-up table 10 for conversion of information words to codewords, by reading a negative codeword corresponding to an information-word for code-conversion, a second look-up table 20 for reading a positive codeword corresponding to the same information-word as applied to the first look-up table 10, a first latch 30 for synchronizing the signal supplied from first look-up table 10 with the signal supplied from the second look-up table 20, a second latch 40 for synchronizing the signal supplied from the second look-up table 20 with the signal supplied from first look-up table 10 in the same manner as that first latch 30, a selecting means SW1 for supplying selectively the signals supplied from first latch 30 and second latch 40, a third latch 50 for storing temporarily the signals supplied from the selecting means SW1 to output the stored signals as in latches 30 and 40, a parallel to serial converter 60 for converting parallel data supplied from third latch 50 to serial data, a CDS calculating circuit 70 for receiving the serial data supplied from the parallel to serial converter 60, and for calculating a CDS value and supplying a signal controlling an operation of selecting means SW1 by the calculated result.

Here, the first, second and third latches 30, 40 and 50 are synchronized by a clock signal CLK2 which is obtained by dividing-by-fourteen a master clock signal CLK1. The clock signal fed to the parallel to serial converter 60 is the master clock signal CLK1. The parallel to serial converter 60 loads the clock signal by a load pulse supplied from a load pulse generator 71 which will be described afterwards.

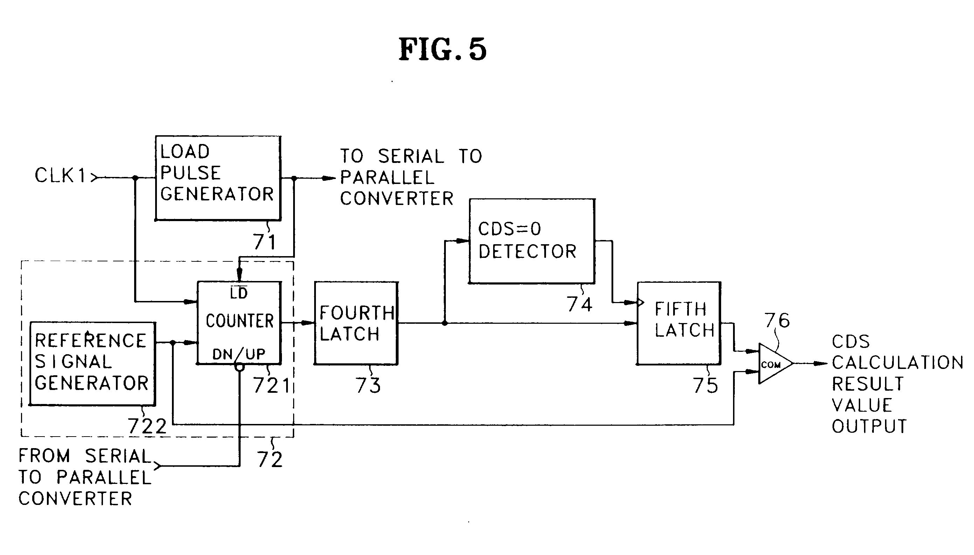

Figure 5 of the accompanying diagrammatic drawings is a block diagram showing a CDS calculating circuit 70 according to a specific embodiment of the present invention.

In Figure 5, the CDS calculating circuit 70 comprises a load pulse generator 71 for receiving a master clock signal CLK1 and for generating a load pulse, a counting means 72 for receiving the master clock signal CLK1 as an input signal and for receiving a signal supplied from the load pulse generator 71 as a control signal, a fourth latch 73 for storing temporarily the signal supplied from counting means 72 similarly as in latches 30, 40 and 50 of Figure 4, a fifth latch 75 for receiving the signal supplied from fourth latch 73, a detector 74 for receiving the signal supplied from fourth latch 73, and for detecting if the CDS value is zero, and supplying the result value to the fifth latch 75, a comparator 76 for receiving the signal supplied from the fifth latch 75, and for comparing it with a predetermined reference value and supplying the CDS calculation result value to a selecting means SW1.

Here, the counting means 72 comprises a reference signal generator 722 for generating a predetermined reference value, a counter 721 which is turned up/down by the signal supplied from the parallel to serial converter 60 of Figure 4, and for loading the signal supplied from reference signal generator 722 by the signal supplied from load pulse generator 722, and for counting the master clock signal CLK1. Also, the reference voltage of the comparator 76 is the signal supplied from the reference signal generator 722.

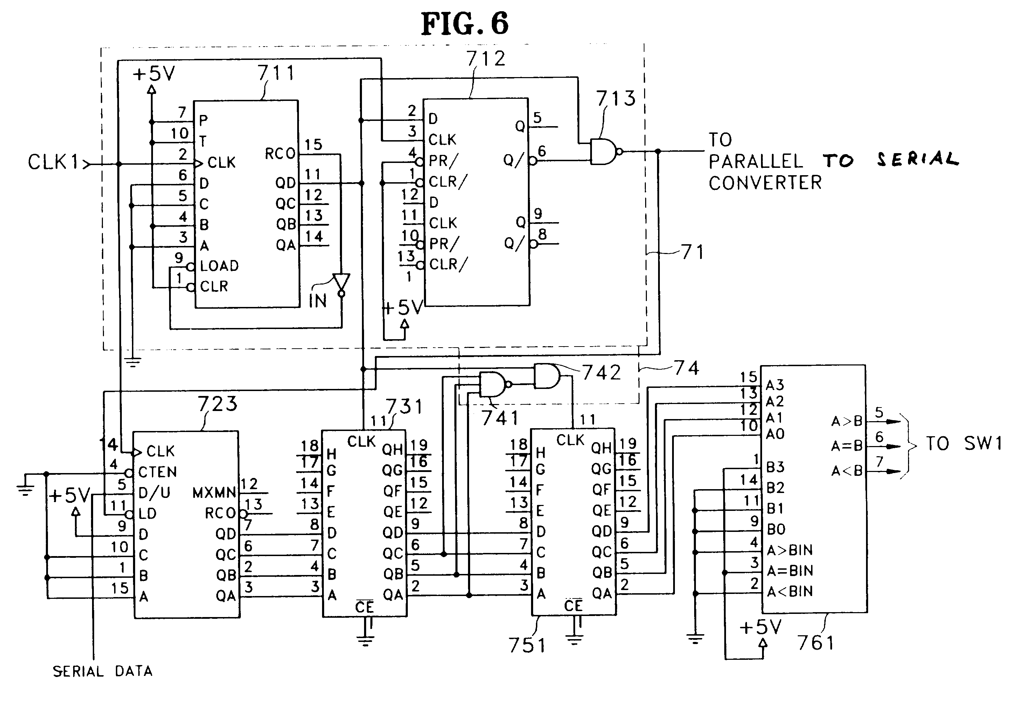

Figure 6 of the accompanying diagrammatic drawings, is a detailed circuit diagram of a CDS calculating circuit 70 as may be used in the embodiment of Figure 5.

In Figure 6, a load pulse generator 71 comprises a counter 711 for receiving the master clock signal CLK1 as an input signal of a clock terminal, and for loading the master clock signal CLK1 by the inverted signal of the output signal of a terminal RCO, and for supplying the signal which is obtained by dividing-by-fourteen the master clock signal CLK1; a D flip-flop 712 for receiving the output signal of a terminal QD of the counter 711, a logic device 713 for performing NAND operation of the signal supplied from the terminal Q of the D flip-flop 712 and the signal supplied from the terminal QD of counter 711.

A counting means 72 comprises a counter 723, of which the reference signal is seven, for counting the master clock signal CLK1 while being loaded by the output signal of the logic device 713.

A fourth latch 73 comprises a latch circuit 731 for receiving the signal supplied from terminals QA through QD of the counter 723 as input signals of respective input terminals A through D, of the latch circuit 731.

A detector 74 comprises a logic device 741 for performing a NAND operation of the output signals of terminals QA through QC of the latch circuit 731, and a logic device 742 for executing an AND operation of the output signal of the logic device 741, and the divided-by-fourteen clock signal CLK2.

A fifth latch 75 comprises a latch circuit 751 for receiving the signal supplied from the terminals QA through QD of the latch circuit 731 as the input signal of terminals A through D of the latch circuit 751, for receiving the signal supplied from the logic device 742 as the input signal of a clock terminal CLK of the fifth latch circuit 751.

A comparator 76 of Figure 5 comprises a comparator 761 for receiving the signal supplied from the terminals QA through QD of the latch circuit 751 as input signals of terminals A3 through A0 of the comparator 761, whose reference signal input terminals B3-B0 are applied with a value of decimal 7 as in counter 723, and for outputting a value of the output terminal as a high level signal with respect to the corresponding operation equation by comparing the value applied to terminal A (ie A3-A0) and the value applied to terminal B (i.e B3-B0)

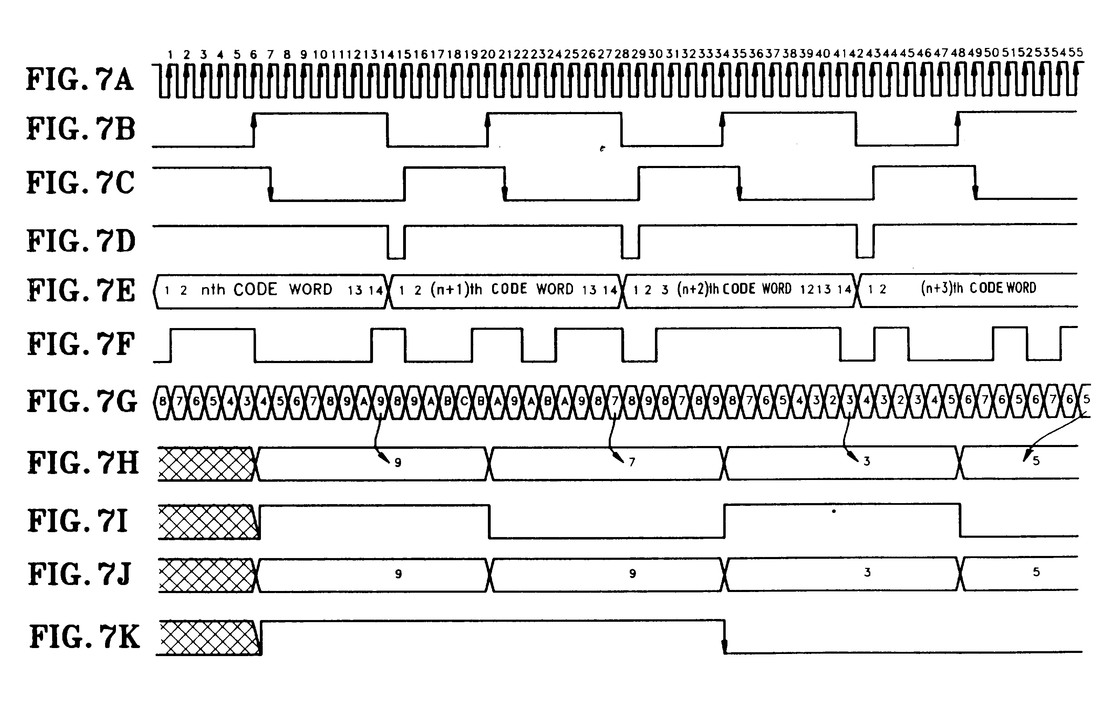

Figures 7A through 7K of the accompanying diagrammatic drawings, are output waveform diagrams which may occur on the respective parts shown in Figure 6.

Figure 7A is a master clock signal CLK1, Figure 7B is a clock signal CLK2 which is obtained by frequency-dividing-by-fourteen the output signal QD of the counter 711, Figure 7C is an output signal Q/ supplied from the D flip-flop 712, Figure 7D is an output signal of the logic device 713, Figure 7E is serial data supplied from the parallel to serial converter 60, Figure 7F is an example of serial data as in Figure 7E, Figure 7G shows output signals of the terminals QA-QD of the counter 723, Figure 7H is an output waveform diagram of the latch circuit 731, Figure 71 is an output waveform diagram of the logic device 741, Figure 7J is an output waveform diagram of the latch circuit 751, and Figure 7K is an output waveform diagram of the comparator 761.

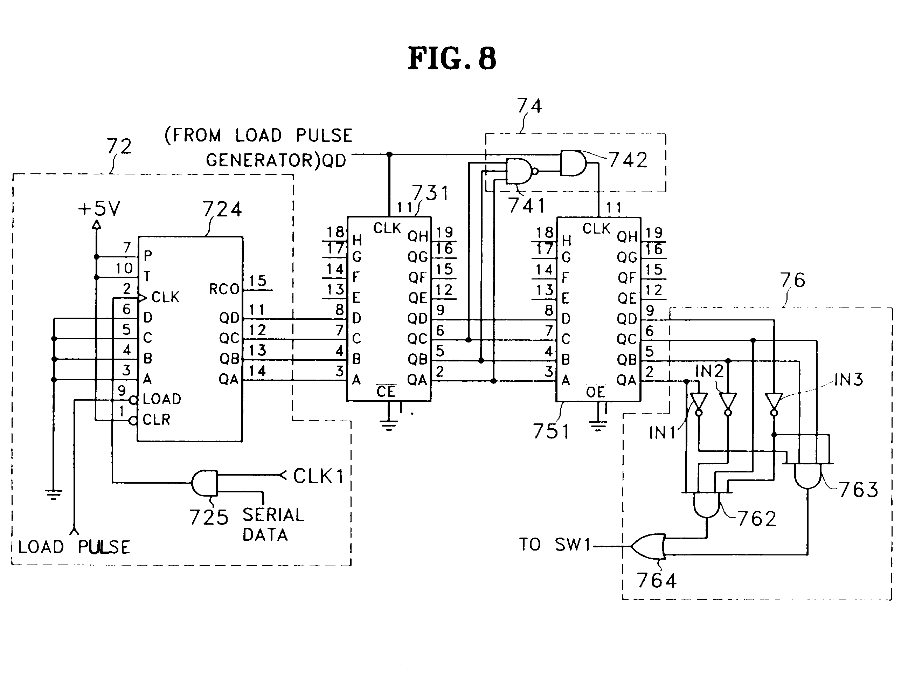

Figure 8 of the accompanying diagrammatic drawings, shows a block diagram of another embodiment according to the present invention of a CDS calculating circuit 70 as may be used in the embodiment shown in Figure 5.

In Figure 8, the load pulse generator 71, the fourth latch 73, the fifth latch 75, and the detector 74 have the same composition as those of Figure 6.

A counting means 72 comprises a logic device 725 for executing an AND operation of master clock signal CLK1 and the signal supplied from the parallel to serial converter 60, a counter 724 for receiving the output signal of the logic device 725 as the input signal of the clock terminal, and which is loaded by the load pulse supplied from load pulse generator 71. A reference signal applied to terminals A through D of the counter 724 are set to a value of decimal 0.

A comparator 76 comprises an inverter IN1 for inverting an output signal QA of a latch circuit 751, an inverter IN2 for inverting an output signal QB of the latch circuit 751, an inverter IN3 for inverting an output signal QD of the latch circuit 751, a logic device 762 for executing an AND operation of output signals QA and QC of the latch 751 and output signals of inverters IN2 and IN3, a logic device 763 for executing an AND operation of outputs of inverters IN2 and IN3 and the output signals QB and QC, and a logic device 764 for executing an OR operation of the output signals of the logic devices 762 and 763.

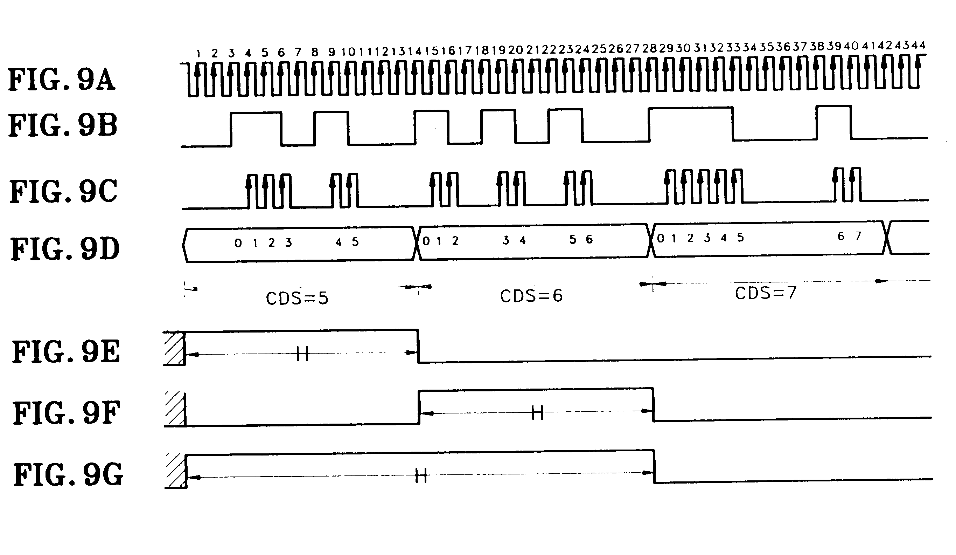

Figures 9A through 9G of the accompanying diagrammatic drawings are output waveforms of the respective parts shown in Figure 8.

Figure 9A is master clock signal CLK1, Figure 9B is serial data supplied from the parallel to serial converter 761, Figure 9C is the signal supplied from the logic device 725, Figure 9D is the signal supplied from the counter 724, Figure 9E is the output signal of the logic device 762, Figure 9F is the output signal of logic device 763, and Figure 9G is the output signal of the logic device 764.

Then, the operations of the above-described embodiments will be described below in turn, with reference to the accompanying drawings.

First of all, the code conversion control apparatus illustrated in Figure 4 operates as follows. When an information-word is applied as a format of "0000" as shown in Figure 3, the corresponding negative codeword is output from first look-up table 10 storing the negative codewords among the corresponding information-words, thereby reading a value of "00000," while the corresponding positive codeword, that is, a value of "11111" is read from the second look-up table 20, storing positive codewords.

The produced values as described above are synchronized through the first latch 30 and the second latch 40 respectively so as to be applied in contact points S1 and S2 of the selecting means SW1. The operation of the selecting means SW1 is controlled by the signals produced in the CDS calculation circuit 70, but a "don't care" state is formed in the case of the initial information word as described above, so that any of the signals produced in the first and second latches 30 and 40 are selected. The selecting means SW1 is controlled to select the negative codeword as shown in Figure 3. Accordingly, a reference contact point S0 of selecting means SW1 is switched to first contact point S1. Thus, signals produced by the first latch 30 are reproduced via the third latch 50 and the parallel to serial converter 60.

The parallel to serial converter 60 converts parallel data into serial data. The signals produced in the parallel to serial converter 60 are recorded via a recording amplifier (not shown) and simultaneously fed back to the CDS calculating circuit 70.

The CDS calculating circuit 70 calculates the DC values of serial data applied thereto and when the serial data applied is "00000" as illustrated in Figure 3, the corresponding CDS value is calculated as a value of decimal -5. Accordingly, currently produced CDS values of the codeword are inclined toward the negative value, so that the control signal is supplied to the selecting means SW1 to select the codeword of the following information word as a positive codeword. Consequently, the positive codeword "11110" of the two codewords corresponding to the following information word "0001" is supplied via the second latch 40 and selecting means SW1 to third latch 50.

The codeword applied to the third latch 50 is converted to the serial data format in the same manner as that described above to be applied to the recording amplifier (not shown) and to the CDS calculation circuit 70, so that the above operations are performed repeatedly therein. Accordingly, the codeword corresponding to the information word is selected and as a result, the DSV value approaches "zero" as illustrated in Figure 3E. That is, the switch SW1 is controlled to select the present codeword according to the CDS value of the previous codeword.

Figure 5 illustrates a CDS calculation circuit 70 according to a specific embodiment of the present invention, of which the operation is as follows.

First of all, the load pulse generator 71 controls loading of the parallel to serial converter 60 when a parallel symbol word is converted into a serial symbol word, and also controls the counter 721 to load the reference signals produced in the reference signal generator 722.

The counting means 72 counts up and down the codeword applied as the serial data from the parallel to serial converter 60 via the up/down counter 721 by the principle of calculating the CDS values as described with reference to Figure 1. The reference value starting the up/down count corresponds to the value produced in the reference signal generator 722. As a result, counter 721 loads the reference value before starting the up/down count depending on the load pulse produced in load pulse generator 71. The CDS value calculated per one codeword is supplied to the fourth latch 73 which temporarily stores the calculated CDS value and then outputs the stored value.

The output signal of the fourth latch 73 is applied to fifth latch 75 and the detector 74. When the value output from the fourth latch 73 is identical to the value of the reference signal output from reference signal generator 722, it means that the DSV value of the codeword is identical to "zero" (that is, the number of binary "1"'s and the number of binary "0"' in the codeword are the same). Accordingly, the CDS value of the codeword which occurred before the previous codeword, needs to be maintained. For this purpose, in the case that CDS value is equal to "zero" in detector 74, the clock of the fifth latch 75 is controlled not to operate, so that the output signal of the fifth latch 75 is constant. The output signal of the fifth latch 75 is applied to the comparator 76.

The comparator 76 compares the output signal of the fifth latch 75 with the value of the reference signal identical to that of the reference signal used in the counter 721. If the output signal of the fifth latch 75 is greater than the value of the reference signal, the CDS of the codeword is determined to be positive. Otherwise, the CDS is determined to be negative. Accordingly, if the CDS value of the previous codeword is positive, the switching in selecting means SW1 is controlled so that the negative codeword is selected as the current codeword, and if the CDS value of the previous codeword is negative, the switching thereof is controlled that the positive codeword is selected as the current codeword. The selecting means SW1 is switched into the first contact point S1 when the negative codeword is selected, and it is switched into the second contact point S2 when the positive codeword is selected.

Figure 6 shows a detailed circuit diagram of an embodiment of the CDS calculating circuit 70 as illustrated in Figure 5, and the embodiment is explained referring to Figures 7A to 7K. In this use, an information word applied is formed in eight-bit and a codeword converted is formed in 14-bit.

First of all, the load pulse generator 71 produces the values for counting repeatedly from 2 to F the master clock signal CLK1 as shown in Figure 7A applied to counter 711, via the output terminals QA, QB, QC and QD. Here, the signal from output terminal QD is applied to the input terminal D of the D flip-flop 712. The signal of the output terminal QD is produced as illustrated in Figure 7B.

The D flip-flop 712 produces a high logic signal to its output terminal Q/ since the signal applied to input terminal D is a low logic signal until the fifth master clock pulse is produced, and then the logic of the signal applied to input terminal D is converted into a high logic according to counting the sixth clock signal. Accordingly, when the seventh master clock signal CLK1 pulse is produced, the logic of the output signal from the output terminal Q/ is converted into a low logic. Thus, the signal produced from output terminal Q/ in the D flip-flop 712 comprises the signal produced in the counter 711, delayed by a clock cycle of the master clock signal CLK1 as shown in Figure 7C.

The logic device 713 performs the NAND operation of the output signal Q/ (Figure 7C) in the D flip-flop 712 and the output signals QD (Figure 7B) in counter 711. The signal produced from logic device 713 is represented as illustrated in Figure 7D. In Figure 7D, a load pulse is produced as a clock CLK1 interval per each falling edge of the output signal QD of the counter 711. The load pulse is applied to the parallel to serial converter 60 to load the codeword of fourteen bits applied during a low period and to then shift the codeword thereof until thirteen clock pulses are produced, and then when the parallel data is applied to the parallel to serial converter 60, the load pulse performs the loading repeatedly.

The serially-converted data is applied to the up/down controlling terminal of counter 723, and the counter 723 loads the preset reference value in response to the falling edge of the pulse produced in the load pulse generator 71, and also counts up and down the loaded value according to the condition of the serial data applied. Here, the preset values are applied in terminals A, B, C and D equal to a value of decimal 7.

Then, the codeword of 14 bits produced in the parallel to serial converter 60 is generated in the same period as that illustrated in Figure 7E, and when the value of the generated codeword is the same as that illustrated in Figure 7F, the counter 723 counts up and down the value of the parallel to serial data applied to the up/down controlling terminal to the loaded value of decimal 7. Here, on the contrary to the above description, when the value of the codeword is equal to "0," counting is performed for the adding operation of "0," and when it is equal to 1, counting is performed for the subtracting operation of "1." Accordingly, when the serial data applied is "0111110000000" as shown in Figure 7F, the resultant value in counter 723 is the same as that shown in Figure 7G.

The latch circuit 731 stores temporarily the final count result value of decimal 9, which is synchronized by a divided-by-fourteen clock signal CLK2 produced in the load pulse generator 71 and is produced as illustrated in Figure 7G and supplies the stored value to the latch circuit 751 and the detector 74.

The detector 74 controls the signal supplied from latch circuit 731 not to transmit into the latch circuit 751 when the signal produced from the latch circuit 731 is identical to "zero." That is, the logic device 741 performing the NAND operation of signals QA, QB, and QC in latch circuit 731 produces a low logic signal if all of the above signals from latch circuit 731 are high, and otherwise, the logic device 741 produces a high logic signal. When all of the above outputs in latch circuit 731 are high, the output value is equal to decimal 7. However, as illustrated in Figure 7H, since the value counted for the previous codeword is decimal 9, the logic device 741 produces a high logic signal. Accordingly, logic device 741 receiving the output signal of logic device 741 and the divided-by-fourteen clock signal CLK2, so as to perform an AND operation, produces the divided-by-fourteen clock signal CLK2 as it is.

Accordingly, the latch circuit 751 holds the output signal from the latch circuit 731 and also supplies the held signal to the input terminals A3, A2, A1 and A0 of the comparator 761. The current values applied to A3, A2, Al, and A0 are equal to decimal 9. The comparator 751 has the same reference value as that in the counter 723 in its input terminal B so that the value applied to the input terminal A is greater than that to the input terminal B. Consequently, it is concluded that the CDS value of the previous codeword is greater than "0," and this means the number of binary "0" is greater than that of binary "1."'s.

Thus, the control signal is supplied to the selecting means SW1 in order that the negative codeword generated in the first lock-up table 10 is selected as the codeword corresponding to the current information word. The first contact point in the selecting means SW1 is established as a high logic terminal, so that the high signal is applied from the CDS calculating circuit 70 to control the operation as described the above, as illustrated in Figure 7K.

On the other hand, when the value counted in the counter 723 is decimal 7 identical to the second counted result value in Figure 7H, the NAND device 741 in detector 74 generates a low logic signal so that the AND device 742 cuts off the clock signal applied to the other input terminals and as a result, the latch circuit 751 maintains the value of the codeword before the previous codeword. Accordingly, the value is applied to the comparator 761 as it is and the selecting means SW1 is controlled according to the above-described conclusion.

However, when the counted value in the counter 723 is decimal 3 as in the third codeword, the output signal from the NAND device 741 in the detector 74 generates a high logic signal so that divided-by-fourteen clock signal CLK2 is generated as it is. Accordingly, the latch circuit 751 holds the output signal from the latch circuit 731 and also supplies the held signal to the comparator 761. The comparator 761 concludes that the CDS value of the previous codeword is smaller than "zero," since the value of the signal applied to input terminal A is smaller than a reference value applied to input terminal B, so as to control the operation of the selecting means SW1 by producing the low logic signal as illustrated in Figure 7K, in order that the positive codeword is selected as a current codeword.

That is, in the embodiment as illustrated in Figure 6, in a case that the number of the bits constituting the codeword increases, all are applicable as they are except that only one more counter is added.

Figure 8 is a detailed circuit diagram of another embodiment of a CDS calculating circuit 70 as illustrated in Figure 5 and the embodiment is explained referring to Figures 9A to 9G.

In Figure 8, the detector 74, and latch circuits 731 and 751 shown in Figure 6 are applicable as they are. Accordingly, a full explanation thereof is already provided, and hereinafter, only the different portions from Figure 6 are explained.

The counting means 72 transmits the master clock signal CLK1 as illustrated in Figure 9C at the interval where the serial data produced in the parallel to serial converter 60 by the logic device 725 is applied as a high logic signal as in Figure 9B. The transmitted signal is applied to the counter 724. The counter 724 loads the reference signal by the load pulse signal as in the counter 723 illustrated in Figure 6. However, the reference value desired to be loaded is equal to a value of "zero" since the input terminals A, B, C and D are connected to the ground. The counter 724 loaded as "zero" counts the counting value applied to the clock terminal as illustrated in Figure 9D.

Accordingly, when the first counted value is equal to decimal 5 as shown in Figure 9D, the latch circuit 731 produces the value. Therefore, the detector 74 and latch circuit 751 operate in the same way as described above, so that the output signal is supplied to the comparator 76. The value produced in the latch circuit 751 is decimal 5 and then the output signals in the output terminals QA, QB, QC and QD are "1010," so that the logic device 762 produces a high logic signal as illustrated in Figure 9E. On the other hand, the logic device 763 produces a low logic signal as illustrated in Figure 9F. Therefore, the logic device 764 controls the selecting means SW1 to be switched to the second contact point, since the signal produced from logic device 762 is high and it means that in the previously produced codeword the number of binary "0" is greater than that of binary "1," so that the logic device 764 transmits the positive codeword as the current codeword to the third latch 50.

However, when the counted result value is produced as in the third waveform of Figure 9D, each value of QA, QB, QC and QD produced in the latch circuit 751 is "1110." Accordingly, the logic device 762 produces a low logic signal, the logic device 763 produces a low logic signal and also the logic device 764 produces a low logic signal, so that on the contrary to the above description, the selecting means SW1 is controlled to select the negative codeword.

That is, in the embodiment as illustrated in Figure 8, there may be an advantage that even if the number of bits forming the codeword increases, operation is acceptable without adding components.

As described above, a DC value calculating circuit according to the embodiments of the present invention may have advantage that the CDS calculation easily operates and also the elements constituting the circuit do not vary accordingly, as the number of bits of the codeword increases or decreases, when the codeword corresponding to the information word applied by a channel coding method in a digital recording and reproducing system is converted since the number of bits of the codeword used for calculating the CDS value is small.

## Claims

1. A digital recording and reproducing apparatus comprising means for mapping plural codewords (symbol words) to information-words in which each received codeword is mapped into a first information word having a negative DC value by using first lookup table means (10) and into a second information word having a positive DC value by using second lookup table means (20) and the first and second information words are stored in first storing means (30) and second storing means (40), respectively in order to control the code conversion for selecting the optimum codeword in a recording and reproducing operation; parallel to serial converting (60) means for converting the signal supplied from said first storing means or said second storing means to a serial data format; selecting means (SW1) for selectively supplying the signals output from said first storing means and said second storing means to the parallel to serial converting means; and a DC value calculating circuit (70) for calculating said DC value of the currently output codeword using the signal supplied from said parallel to serial converting means, and for supplying a control signal to the selecting means to select the signal to be supplied to the parallel to serial converting means corresponding to an information-word following the current information-word, the DC value calculating circuit comprising counting means (72) comprising a counter (721) being loaded with a reference value from a reference signal generator (722) for the first codeword when the apparatus starts working, which counter is turned up/down by the signal supplied from said parallel to serial converting means for subsequent codewords for generating a codeword digital sum (CDS) value characterised by the DC value calculating circuit comprising:
a load pulse generator (71) for generating a second clock signal by frequency dividing a master clock signal by a predetermined value, whereby said second clock signal is used to control said counting means (72) ;
a detector (74) for detecting whether or not the CDS value from said counting means is the same as said reference value;
third storing means for holding the previous input value when the reference value is the same as the CDS value, and storing the CDS value from said counting means when said reference value is not the same as the CDS value from said counter; and
a comparator (76) for comparing the magnitude of the signal supplied from said third storing means with the magnitude of said reference value and supplying the result value as a signal for controlling the operation of said selecting means.

2. The digital recording and reproducing apparatus as claimed in claim 1, wherein said load pulse generator comprises:
a counter (711) for receiving said master clock signal and producing a second clock signal which is frequency-divided by a predetermined value;
a delay device for receiving said second clock signal from said counter, and delaying the same in one clock period of said master clock; and
a logic device for performing an AND operation for the output signal of said delay device and said second clock signal, to thereby produce the load pulse.

3. The digital recording and reproducing apparatus as claimed in claim 1 or 2, wherein said detector (74) comprises a first logic device (741) for performing a NAND operation for output value of said counter; and a second logic device (742) for performing an AND operation for output signal of said first logic device and said second clock signal, to thereby produce a signal for controlling the operation of said third storing means according to the output signal of said first logic device.

4. The digital recording and reproducing apparatus as claimed in claim 1, 2 or 3, wherein said counter (72) comprises a logic device (725) for performing an AND operation for said master clock signal and the signal supplied from said parallel to serial converting means, to thereby produce said master clock signal where said serial data is in a high state; and a counter (724) for receiving a predetermined reference value according to the load pulse generated by said load pulse generator (71), to thereby count the clock signal from said logic device.

5. The digital recording and reproducing apparatus as claimed in any one of the preceding claims, wherein said comparator (76) comprises a plurality of inverters (IN1, IN2, IN3) for inverting the state of the predetermined bits of the output signal of said third storing means; a plurality of logic devices (762, 763), for performing AND operation(s) for the output signals of said inverters and said third storing means; and a logic device (764) for performing an OR operation for the output signal of said plurality of said logic devices, to thereby produce a control signal for controlling the operation of said selecting means.

6. In a digital recording and reproducing apparatus comprising means for mapping plural codewords (symbol words) to a information-words in which each received codeword is mapped into a first information word having a negative DC value by using first lookup table means (10) and into a second information word having a positive DC value by using second lookup table means (20) and the first and second information words are stored in first storing means (30) and second storing means (40), respectively in order to control the code conversion for selecting the optimum codeword in a recording and reproducing operation; parallel to serial converting (60) means for converting the signal supplied from said first storing means or said second storing means to a serial data format; selecting means (SW1) for selectively supplying the signals output from said first storing means and said second storing means to the parallel to serial converting means; and a DC value calculating circuit (70) for calculating said DC value of the currently output codeword using the signal supplied from said parallel to serial converting means, and for supplying a control signal to the selecting means to select the signal to be supplied to the parallel to serial converting means corresponding to an information-word following the current information-word, the DC value calculating circuit comprising counting means (72) comprising a counter (721) loaded with a reference value from a reference signal being generator (722) for the first codeword when the apparatus starts working, which counter is turned up/down by the signal supplied from said parallel to serial converting means for subsequent codewords for generating a codeword digital sum (CDS) value a method of channel coding characterised by the steps of:
generating from a load pulse generator (71) a second clock signal by frequency dividing a master clock signal by a predetermined value, and using said second clock signal to control said counting means (72) ;
detecting whether or not the CDS value from said counting means is the same as said reference value;
holding in a third storing means the previous input value when the reference value is the same as the CDS value, and storing the CDS value from said counting means when said reference value is not the same as the CDS value from said counter; and
comparing the magnitude of the signal supplied from said third storing means with the magnitude of said reference value and supplying the result value as a signal for controlling the operation of said selecting means.

## Patentansprüche

1. Eine digitale Aufzeichnungs- und Wiedergabevorrichtung, die umfaßt eine Einrichtung zur Abbildung mehrerer Kodierungswörter (Symbolwörter) auf Informations-wörter, in der jedes erhaltene Kodierungswort auf ein erstes Informationswort abgebildet wird, das einen negativen Gleichstromwert aufweist, Indem eine erste Nachschlagtabelleneinrichtung (10) verwendet wird, und auf ein zweites Informationswort, das einen positiven Gleichstromwert aufweist, indem eine zweite Nachschlagtabelleneinrichtung (20) verwendet wird, und das erste und zweite Informationswort in einer ersten Speichereinrichtung (30) bzw. einer zweiten Speichereinrichtung (40) gespeichert wird, um die Codeumwandlung zur Auswahl des optimalen Kodierungsworts bei einem Aufzeichungs- und Wiedergabevogang zu steuern, eine parallel zu seriell Umwandlungseinrichtung (60) zur Umwandlung des Signals, das von der genannten ersten Speichereinrichtung oder der genannten zweiten Speichereinrichtung zugeführt wird, in ein serielles Datenformat; eine Auswähleinrichtung (SW1), um selektiv die Signale, die von der genannten ersten Speichereinrichtung und der genannten zweiten Speichereinrichtung ausgegeben werden, der parallel zu seriell Umwandlungseinrichtung zuzuführen; und eine Gleichstromwert-Berechnungsschaltung (70) zur Berechnung des genannten Gleichstromwerts des gegenwärtig ausgegebenen Kodierungsworts, wobei das Signal verwendet wird, das von der genannten parallel zu seriell Umwandlungseinrichtung zugeführt wird, und zum Zuführen eines Steuersignals zu der Auswähleinrichtung, um das Signal auszuwählen, das der parallel zu seriell Umwandlungseinrichtung zugeführt werden soll, das einem Informationswort entspricht, das dem gegenwärtigen Informationswort folgt, wobei die Gleichstromwert-Berechnungsschaltung eine Zähleinrichtung (72) umfaßt, die einen Zähler (721) umfaßt, der mit einem Bezugswert von einem Bezugssignalgenerator (722) für das erste Kodierungswort geladen wird, wenn die Vorrichtung die Operation startet, wobei der Zähler durch das Signal vorwärts/rückwärts durch das Signal, das von der genannten parallel zu seriell Umwandlungseinrichtung zugeführt wird, für nachfolgende Kodierungswörter geschaltet wird, um einen digitalen Summierungswert (CDS) eines Kodierungsworts zu erzeugen, **dadurch gekennzeichnet**, daß die Gleichstromwert-Berech-nungsschaltung umfaßt:
einen Ladeimpulsgenerator (71) zur Erzeugung eines zweiten Taktsignals durch Frequenzteilung eines Haupttaktsignals durch einen vorbestimmten Wert, wodurch das genannte zweite Taktsignal verwendet wird, die genannte Zähleinrichtung (72) zu steuern,
eine Bestimmungseinrichtung (74) zur Bestimmung, ob der CDS Wert von der genannten Zähleinnchtung der gleiche wie der genannte Bezugswert ist oder nicht,
eine dritte Speichereinrichtung zum Halten des vorhergehend eingegebenen Werts, wenn der Bezugswert der gleiche wie der CDS Wert ist, und zum Speichern des CDS Werts von der genannten Zähleinrichtung, wenn der genannte Bezugswert nicht der gleiche wie der CDS-Wert von dem genannten Zähler ist, und
einen Vergleicher (76) zum Vergleichen der Größe des Signals, das von der genannten dritten Speichereinrichtung zugeführt wird, mit der Größe des genannten Bezugswertes, und zum Zuführen des Ergebniswertes als ein Signal zur Steuerung der Arbeitsweise der genannten Auswahleinrichtung.

2. Die digitale Aufzeichungs- und Wiedergabevorrichtung, wie in Anspruch 1 beansprucht, wobei der genannte Ladeimpulsgenerator umfaßt:
einen Zähler (711) zum Erhalten des genannten Haupttaktsignals und zur Erzeugung eines zweiten Taktsignals, das durch einen vorbestimmten Wert frequenzgeteilt ist,
eine Verzögerungseinrichtung, die das genannte zweite Taktsignal von dem genannten Zähler erhält und dieses um eine Taktperiode des genannten Haupttakts verzögert, und
eine Logikeinrichtung, die eine UND Operation für das Ausgangssignal der genannten Verzögerungseinrichtung und des genannten zweiten Taktsignals durchführt, um dadurch den Ladeimpuls zu erzeugen.

3. Die digitale Aufzeichungs- und Wiedergabevorrichtung, wie in Anspruch 1 oder 2 beansprucht, wobei die genannte Bestimmungseinrichtung (74) eine erste Logikeinrichtung (741), die eine NICHT-UND Operation für den Ausgangswert des genannten Zählers durchführt, und eine zweite Logikeinrichtung (742) umfaßt, die eine UND Operation für das Ausgangssignal der genannten ersten Logikeinrichtung und des genannten zweiten Taktsignals durchführt, um dadurch ein Signal zur Steuerung der Arbeitsweise der genannten dritten Speichereinrichtung gemäß dem Ausgangssignal der genannten ersten Logikeinrichtung zu erzeugen.

4. Die digitale Aufzeichungs- und Wedergabevorrichtung, wie in Anspruch 1, 2 oder 3 beansprucht, wobei der genannte Zähler (72) eine Logikeinrichtung (725) umfaßt, um eine UND Operation des genannten Haupttaktsignals und des Signals durchzuführen, das von der genannten parallel zu seriell Umwandlungseinrichtung zugeführt wird, um dadurch das genannte Haupttaktsignal zu erzeugen, wo die genannte serielle Date in einem hohen Zustand ist, sowie einen Zähler (724), der einen vorbestimmten Bezugswert gemäß dem Ladeimpuls erhält, der durch den genannten Ladeimpulsgenerator (71) erzeugt wurde, um dadurch das Taktsignal von der genannten Logikeinrichtung zu zählen.

5. Die digitale Aufzeichungs- und Wiedergabevorrichtung, wie in irgendeinem der vorhergehenden Ansprüche beansprucht, wobei der genannte Vergleicher (76) umfaßt eine Mehrzahl Umkehrschaltungen (IN1, IN2, IN3) zur Umkehrung des Zustands der vorbestimmten Bits des Ausgangssignals der genannten dritten Speichereinrichtung, eine Mehrzahl Logikeinrichtungen (762, 763), um eine UND Operation(en) für die Ausgangssignale der genannten Umkehrschaltungen und der genannten dritten Speichereinrichtung durchzuführen, und eine Logikeinrichtung (764), um eine ODER Operation für das Ausgangssignal der genannten Mehrzahl der genannten Logikeinrichtungen durchzuführen, um dadurch ein Steuersignal zur Steuerung der Arbeitsweise der genannten Auswähleinrichtung zu erzeugen.

6. In einer digitale Aufzeichnungs- und Wedergabevorrichtung, die umfaßt eine Einrichtung zur Abbildung mehrerer Kodierungswörter (Symbolwörter) auf Informationswörter, in der jedes erhaltene Kodierungswort auf ein erstes Informationswort abgebildet wird, das einen negativen Gleichstromwert aufweist, indem eine erste Nachschlagtabelleneinrichtung (10) verwendet wird, und auf ein zweites Informationswort, das einen positiven Gleichstromwert aufweist, indem eine zweite Nachschlagtabelleneinrichtung (20) verwendet wird, und das erste und zweite Informationswort in einer ersten Speichereinrichtung (30) bzw. einer zweiten Speichereinrichtung (40) gespeichert wird, um die Codeumwandlung zur Auswahl des optimalen Kodierungsworts bei einem Aufzeichungs- und Wiedergabevogang zu steuern, eine parallel zu seriell Umwandlungseinrichtung (60) zur Umwandlung des Signals, das von der genannten ersten Speichereinrichtung oder der genannten zweiten Speichereinrichtung zugeführt wird, in ein serielles Datenformat; eine Auswähleinrichtung (SW1), um selektiv die Signale, die von der genannten ersten Speichereinrichtung und der genannten zweiten Speichereinrichtung ausgegeben werden, der parallel zu seriell Umwandlungseinrichtung zuzuführen; und eine Gleichstromwert-Berechnungsschaltung (70) zur Berechnung des genannten Gleichstromwerts des gegenwärtig ausgegebenen Kodierungsworts, wobei das Signal verwendet wird, das von der genannten parallel zu seriell Umwandlungseinrichtung zugeführt wird, und zum Zuführen eines Steuersignals zu der Auswähleinrichtung, um das Signal auszuwählen, das der parallel zu seriell Umwandlungseinrichtung zugeführt werden soll, das einem Informationswort entspricht, das dem gegenwärtigen Informationswort folgt, wobei die Gleichstromwert-Berechnungsschaltung eine Zähleinrichtung (72) umfaßt, die einen Zähler (721) umfaßt, der mit einem Bezugswert von einem Bezugssignalgenerator (722) für das erste Kodierungswort geladen wird, wenn die Vorrichtung die Operation startet, wobei der Zähler durch das Signal vorwärts/rückwärts durch das Signal, das von der genannten parallel zu seriell Umwandlungseinrichtung zugeführt wird, für nachfolgende Kodierungswörter geschaltet wird, um einen digitalen Summierungswert (CDS) eines Kodierungsworts zu erzeugen, wobei ein Verfahren zur Kanalkodierung **gekennzeichnet** ist durch die Schritte:
Erzeugen eines zweiten Taktsignals von einem Ladeimpulsgenerator (71) zur durch Frequenzteilung eines Haupttaktsignals durch einen vorbestimmten Wert, wodurch das genannte zweite Taktsignal verwendet wird, die genannte Zähleinrichtung (72) zu steuern.
Bestimmen, ob der CDS Wert von der genannten Zähleinrichtung der gleiche wie der genannte Bezugswert ist oder nicht,
Halten des vorhergehend eingegebenen Werts in einer dritten Speichereinrichtung, wenn der Bezugswert der gleiche wie der CDS Wert ist, und zum Speichern des CDS Werts von der genannten Zähleinrichtung, wenn der genannte Bezugswert nicht der gleiche wie der CDS-Wert von dem genannten Zähler ist, und
Vergleichen der Größe des Signals, das von der genannten dritten Speichereinrichtung zugeführt wird, mit der Größe des genannten Bezugswertes, und zum Zuführen des Ergebniswertes als ein Signal zur Steuerung der Arbeitsweise der genannten Auswähleinrichtung.

## Revendications

1. Dispositif d'enregistrement et de reproduction numérique comprenant des moyens pour faire correspondre plusieurs mots de code (mots symboliques) à des mots d'information dans lesquels chaque mot de code reçu est mis en correspondance avec un premier mot d'information ayant une valeur de courant continu négative en utilisant des premiers moyens de tableau de consultation (10) et avec un second mot d'information ayant une valeur de courant continu positive en utilisant des seconds moyens de tableau de consultation (20) et les premier et second mots d'information sont mémorisés dans des premiers moyens de mémorisation (30) et des seconds moyens de mémorisation (40), respectivement, de façon à commander la conversion de code pour sélectionner le mot de code optimal dans une opération d'enregistrement et de reproduction; des moyens de conversion parallèle-série (60) pour convertir dans un format de données série le signal fourni par lesdits premiers moyens de mémorisation ou lesdits seconds moyens de mémorisation; des moyens de sélection (SW1) pour fournir sélectivement les signaux délivrés par lesdits premiers moyens de mémorisation et lesdits seconds moyens de mémorisation aux moyens de conversion parallèle-série; et un circuit de calcul de valeur de courant continu (70) pour calculer ladite valeur de courant continu du mot de code en cours de délivrance en utilisant le signal fourni par lesdits moyens de conversion parallèle-série, et pour fournir un signal de commande aux moyens de sélection pour sélectionner le signal à fournir aux moyens de conversion parallèle-série correspondant à un mot d'information suivant le mot d'information courant, le circuit de calcul de valeur de courant continu comprenant des moyens de comptage (72) comprenant un compteur (721) qui est chargé avec une valeur de référence provenant d'un générateur de signal de référence (722) pour le premier mot de code lorsque le dispositif commence à fonctionner, ledit compteur étant commuté en comptage/décomptage par le signal fourni par lesdits moyens de conversion parallèle-série pour des mots de code ultérieurs afin de produire une valeur de somme numérique de mots de code (CDS), caractérisé en ce qu'il comprend:
un générateur d'impulsion de chargement (71) pour produire un second signal d'horloge par division de fréquence d'un signal d'horloge maître par une valeur prédéterminée, ledit second signal d'horloge étant utilisé pour commander lesdits moyens de comptage (72) ;
un détecteur (74) pour détecter si la valeur CDS provenant desdits moyens de comptage est identique ou pas à ladite valeur de référence;
des troisièmes moyens de mémorisation pour maintenir la valeur d'entrée précédente lorsque la valeur de référence est identique à la valeur CDS, et mémoriser la valeur CDS provenant desdits moyens de comptage lorsque ladite valeur de référence est différente de la valeur CDS provenant dudit compteur; et
un comparateur (76) pour comparer l'amplitude du signal fourni par lesdits troisièmes moyens de mémorisation avec l'amplitude de ladite valeur de référence et fournir la valeur de résultat comme étant un signal pour commander le fonctionnement desdits moyens de sélection.

2. Dispositif d'enregistrement et de reproduction numérique selon la revendication 1, dans lequel ledit générateur d'impulsion de chargement comprend:
un compteur (711) pour recevoir ledit signal d'horloge maître et produire un second signal d'horloge qui est divisé en fréquence par une valeur prédéterminée;
un dispositif de retard pour recevoir ledit second signal d'horloge provenant dudit compteur, et retarder celui-ci d'une période d'horloge de ladite horloge maître; et
un dispositif logique pour réaliser une opération ET pour le signal de sortie dudit dispositif de retard et dudit second signal d'horloge, afin de produire ainsi l'impulsion de chargement.

3. Dispositif d'enregistrement et de reproduction numérique selon la revendication 1 ou 2, dans lequel ledit détecteur (74) comprend un premier dispositif logique (741) pour réaliser une opération NON-ET pour une valeur de sortie dudit compteur; et un second dispositif logique (742) pour réaliser une opération ET pour un signal de sortie dudit premier dispositif logique et ledit second signal d'horloge, afin de produire ainsi un signal pour commander le fonctionnement desdits troisièmes moyens de mémorisation en fonction du signal de sortie dudit premier dispositif logique.

4. Dispositif d'enregistrement et de reproduction numérique selon la revendication 1, 2 ou 3, dans lequel ledit compteur (72) comprend un dispositif logique (725) pour réaliser une opération ET pour ledit signal d'horloge maître et le signal fourni par lesdits moyens de conversion parallèle-série, afin de produire ainsi ledit signal d'horloge maître dans lequel lesdites données série sont dans un état haut; et un compteur (724) pour recevoir une valeur de référence prédéterminée en fonction de l'impulsion de chargement produite par ledit générateur d'impulsion de chargement (71), afin de compter ainsi le signal d'horloge dudit dispositif logique.

5. Dispositif d'enregistrement et de reproduction numérique selon l'une quelconque des revendications précédentes, dans lequel ledit comparateur (76) comprend une pluralité d'inverseurs (IN1, IN2, IN3) pour inverser l'état des bits prédéterminés du signal de sortie desdits troisièmes moyens de mémorisation; une pluralité de dispositifs logiques (762, 763) pour réaliser la ou les opérations ET pour les signaux de sortie desdits inverseurs et desdits troisièmes moyens de mémorisation; et un dispositif logique (764) pour réaliser une opération OU pour le signal de sortie de ladite pluralité desdits dispositifs logiques, afin de produire ainsi un signal de commande pour commander le fonctionnement desdits moyens de sélection.

6. Procédé de codage de canal, dans un dispositif d'enregistrement et de reproduction numérique comprenant des moyens pour faire correspondre plusieurs mots de code (mots symboliques) à des mots d'information dans lesquels chaque mot de code reçu est mis en correspondance avec un premier mot d'information ayant une valeur de courant continu négative en utilisant des premiers moyens de tableau de consultation (10) et avec un second mot d'information ayant une valeur de courant continu positive en utilisant des seconds moyens de tableau de consultation (20) et les premier et second mots d'information sont mémorisés dans des premiers moyens de mémorisation (30) et des seconds moyens de mémorisation (40), respectivement, de façon à commander la conversion de code pour sélectionner le mot de code optimal dans une opération d'enregistrement et de reproduction; des moyens de conversion parallèle-série (60) pour convertir dans un format de données série le signal fourni par lesdits premiers moyens de mémorisation ou lesdits seconds moyens de mémorisation; des moyens de sélection (SW1) pour fournir sélectivement les signaux délivrés par lesdits premiers moyens de mémorisation et lesdits seconds moyens de mémorisation aux moyens de conversion parallèle-série; et un circuit de calcul de valeur de courant continu (70) pour calculer ladite valeur de courant continu du mot de code en cours de délivrance en utilisant le signal fourni par lesdits moyens de conversion parallèle-série, et pour fournir un signal de commande aux moyens de sélection pour sélectionner le signal à fournir aux moyens de conversion parallèle-série correspondant à un mot d'information suivant le mot d'information courant, le circuit de calcul de valeur de courant continu comprenant des moyens de comptage (72) comprenant un compteur (721) qui est chargé avec une valeur de référence provenant d'un générateur de signal de référence (722) pour le premier mot de code lorsque le dispositif commence à fonctionner, ledit compteur étant commuté en comptage/décomptage par le signal fourni par lesdits moyens de conversion parallèle-série pour des mots de code ultérieurs afin de produire une valeur de somme numérique de mots de code (CDS), le procédé étant caractérisé par les étapes consistant à:
produire à partir d'un générateur d'impulsion de chargement (71) un second signal d'horloge par division de fréquence d'un signal d'horloge maître par une valeur prédéterminée, et utiliser ledit second signal d'horloge pour commander lesdits moyens de comptage (72) ;
détecter si la valeur CDS provenant desdits moyens de comptage est identique ou pas à ladite valeur de référence;
maintenir dans des troisièmes moyens de mémorisation la valeur d'entrée précédente lorsque la valeur de référence est identique à la valeur CDS, et mémoriser la valeur CDS provenant desdits moyens de comptage lorsque ladite valeur de référence est différente de la valeur CDS provenant dudit compteur; et
comparer l'amplitude du signal fourni par lesdits troisièmes moyens de mémorisation à l'amplitude de ladite valeur de référence et fournir la valeur de résultat comme étant un signal pour commander le fonctionnement desdits moyens de sélection.
